(19) Europäisches Patentamt / European Patent Office / Office européen des brevets

(11) **EP 4 372 132 A1**

(12) # EUROPEAN PATENT APPLICATION
published in accordance with Art. 153(4) EPC

(43) Date of publication:
**22.05.2024 Bulletin 2024/21**

(21) Application number: **22841995.8**

(22) Date of filing: **04.07.2022**

(51) International Patent Classification (IPC):
*D01F 6/70* (2006.01)     *C08G 18/32* (2006.01)
*C08G 18/48* (2006.01)     *C08G 18/65* (2006.01)
*D01F 6/94* (2006.01)

(52) Cooperative Patent Classification (CPC):
**C08G 18/32; C08G 18/48; C08G 18/65; D01F 6/70; D01F 6/94**

(86) International application number:
**PCT/JP2022/026616**

(87) International publication number:
**WO 2023/286651 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.07.2021 JP 2021115909**

(71) Applicant: **Asahi Kasei Kabushiki Kaisha Tokyo 1000006 (JP)**

(72) Inventor: **GOTO, Hideyuki Tokyo 100-0006 (JP)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54) **THERMOPLASTIC POLYURETHANE ELASTIC FIBER, WOUND BODY OF SAME, GATHER AND SANITARY MATERIALS CONTAINING SAID THERMOPLASTIC POLYURETHANE ELASTIC FIBER, AND METHOD FOR PRODUCING SAID POLYURETHANE ELASTIC FIBER**

(57)     The present invention provides: a thermoplastic polyurethane elastic fiber which has both recoverability and unwindability; a wound body of this thermoplastic polyurethane elastic fiber; and a gather member and a hygiene article, each of which comprises this thermoplastic polyurethane elastic fiber. The present invention relates to: a thermoplastic polyurethane elastic fiber which is characterized by containing 0.05 ppm to 100 ppm of at least one substance that is selected from the group consisting of dimethyl acetamide (DMAc), dimethyl formamide (DMF), dimethyl sulfoxide (DMSO) and N-methyl pyrrolidone (NMP); a wound body of this thermoplastic polyurethane elastic fiber; gather and hygiene articles, each of which comprises this thermoplastic polyurethane elastic fiber; and a method for producing this thermoplastic polyurethane elastic fiber.

EP 4 372 132 A1

**Description**

FIELD

The present invention relates to a thermoplastic polyurethane elastic fiber and to its wound body, to a gather and hygiene article (or sanitary material) containing the thermoplastic polyurethane elastic fiber, and to a method for producing the polyurethane elastic fiber.

BACKGROUND

Polyurethane elastic fibers are used for such clothing items as inner wear, stockings, compression wear and diapers. For such purposes, polyurethane elastic fibers must exhibit recoverability when elongated, and must have satisfactory unwinding property (or reelability) from their wound bodies so that yarn breakage does not occur during processing for production of the items.

PTL 1 discloses that a polyurethane elastic fiber comprising a lubricating agent and a Guerbet alcohol helps to promote release from the polyurethane elastic fiber of DMAc which is used in production of the polyurethane elastic fiber by dry spinning, and that unwinding property is improved by limiting the residue of DMAc to around 300 to 900 ppm.

PTL 2 discloses that an oil agent comprising an amino-modified polyorganosiloxane resin provides a satisfactory reeling balance for the inner layer and outer layer of the cheese during production of an elastic fiber (especially by melt spinning).

[CITATION LIST]

[PATENT LITERATURE]

[PTL 1] Japanese Unexamined Patent Publication No. 2017-186704
[PTL 2] Japanese Unexamined Patent Publication No. 2003-49368

SUMMARY

[TECHNICAL PROBLEM]

However, no thermoplastic polyurethane elastic fiber has yet been disclosed that exhibits satisfactory recoverability and unwinding property in melt spinning.

In light of the aforementioned problems of the prior art, the problem to be solved by the invention is to provide a thermoplastic polyurethane elastic fiber having both recoverability and unwinding property, and a wound body containing it, a gather and hygiene article containing the thermoplastic polyurethane elastic fiber, and a method for producing the polyurethane elastic fiber.

[SOLUTION TO PROBLEM]

As a result of much ardent research with the goal of solving the aforementioned problem, the present inventors have completed this invention upon finding, unexpectedly, that the problem can be solved by adding a specific amount of at least one compound selected from the group consisting of dimethylacetamide (DMAc), dimethylformamide (DMF), dimethyl sulfoxide (DMSO) and N-methylpyrrolidone (NMP) to a thermoplastic polyurethane elastic fiber.

Specifically, the present invention is as follows.

[1] A thermoplastic polyurethane elastic fiber which comprises at least one compound selected from among dimethylacetamide (DMAc), dimethylformamide (DMF), dimethyl sulfoxide (DMSO) and N-methylpyrrolidone (NMP), at 0.05 ppm to 100 ppm.
[2] The thermoplastic polyurethane elastic fiber according to [1] above, which comprises at least one compound selected from among dimethylacetamide (DMAc), dimethylformamide (DMF), dimethyl sulfoxide (DMSO) and N-methylpyrrolidone (NMP), at 0.05 ppm to 10 ppm.
[3] The thermoplastic polyurethane elastic fiber according to [2] above, which comprises at least one compound selected from among dimethylacetamide (DMAc), dimethylformamide (DMF), dimethyl sulfoxide (DMSO) and N-methylpyrrolidone (NMP), at 0.05 ppm to 5 ppm.

[4] The thermoplastic polyurethane elastic fiber according to any one of [1] to [3] above, which includes a thermoplastic polyurethane comprising a polymer polyol, a diisocyanate and a low-molecular-weight diol.

[5] The thermoplastic polyurethane elastic fiber according to [4] above, wherein the molecular weight of the low-molecular-weight diol is 60 to 120.

[6] The thermoplastic polyurethane elastic fiber according to any one of [1] to [5] above, wherein the thermoplastic polyurethane elastic fiber is multifilament yarn, and the ratio of the maximum and minimum diameter of the constituent monofilaments is 1.1 to 2.0.

[7] The thermoplastic polyurethane elastic fiber according to [6] above, wherein the monofilament size is 5 dtex to 40 dtex.

[8] The thermoplastic polyurethane elastic fiber according to any one of [1] to [7] above, wherein the outflow start temperature of the thermoplastic polyurethane elastic fiber as determined with a flow tester is 150°C to 220°C.

[9] The thermoplastic polyurethane elastic fiber according to any one of [1] to [8] above, wherein for the thermoplastic polyurethane elastic fiber, the ratio of the 100% elongation stress at 20°C with respect to the 100% elongation stress at 80°C is 1.30 to 3.00.

[10] The thermoplastic polyurethane elastic fiber according to any one of [1] to [9] above, which has essentially no allophanate bond crosslinks.

[11] The thermoplastic polyurethane elastic fiber according to any one of [1] to [10] above, which is for a hygiene article.

[12] A wound body of a thermoplastic polyurethane elastic fiber according to any one of [1] to [11] above.

[13] A gather containing a thermoplastic polyurethane elastic fiber according to any one of [1] to [11] above.

[14] A hygiene article containing a thermoplastic polyurethane elastic fiber according to any one of [1] to [11] above.

[15] A method for producing a thermoplastic polyurethane elastic fiber according to any one of [1] to [11] above, wherein the method includes a step of melt spinning a polyurethane resin.

[16] The method for producing a thermoplastic polyurethane elastic fiber according to [15] above, wherein the polyurethane resin comprises at least one compound selected from among dimethylacetamide (DMAc), dimethylformamide (DMF), dimethyl sulfoxide (DMSO) and N-methylpyrrolidone (NMP).

[17] The method for producing a thermoplastic polyurethane elastic fiber according to [16] above, wherein the polyurethane resin comprises at least one compound selected from among dimethylacetamide (DMAc), dimethylformamide (DMF), dimethyl sulfoxide (DMSO) and N-methylpyrrolidone (NMP) at 0.05 ppm to 100 ppm.

[18] The method for producing a thermoplastic polyurethane elastic fiber according to [11] above, wherein the method includes a step of melt spinning a polyurethane resin comprising at least one compound selected from among dimethylacetamide (DMAc), dimethylformamide (DMF), dimethyl sulfoxide (DMSO) and N-methylpyrrolidone (NMP) at 0.05 ppm to 100 ppm.

[ADVANTAGEOUS EFFECTS OF INVENTION]

The thermoplastic polyurethane elastic fiber and its wound body having the construction described above, as one aspect of the invention, are a thermoplastic polyurethane elastic fiber and its wound body which exhibit recoverability and unwinding property and are suited for a gather. The gather and hygiene article containing it, according to another aspect of the invention, have high recoverability and are therefore easy to wear and remove, have satisfactory fittability and are less likely to slip off.

BRIEF DESCRIPTION OF DRAWINGS

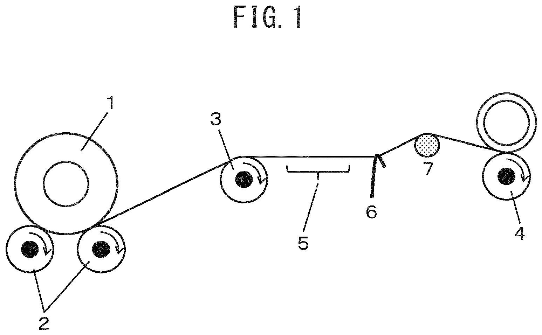

Fig. 1 is a schematic diagram of an apparatus used for evaluation of unwinding property.

DESCRIPTION OF EMBODIMENTS

An embodiment for carrying out the invention (hereunder referred to as "the embodiment") will now be described in detail. The invention is not limited to the embodiment described below, however, and various modifications may be implemented within the scope of the gist thereof.

[Thermoplastic polyurethane elastic fiber]

The thermoplastic polyurethane elastic fiber of the embodiment comprises at least one compound selected from the group consisting of DMAc, DMF, DMSO and NMP (hereunder also referred to as "specific compound") at 0.05 ppm to 100 ppm. Since the thermoplastic polyurethane elastic fiber of the embodiment comprises the aforementioned specific compound at 0.05 ppm to 100 ppm, it exhibits excellent recoverability and unwinding property, while also helping to reduce nozzle clogging caused by adhesion onto the thermoplastic polyurethane elastic fiber by fine powder generated from a nonwoven fabric or absorbent during production of diapers.

The reason that thermoplastic polyurethane elastic fiber of the embodiment comprising the aforementioned specific compound at 0.05 ppm to 100 ppm can improve recoverability is not fully understood, but the present inventors set forth the following conjecture. When the specific compound is present in the thermoplastic polyurethane elastic fibers at 0.05 ppm to 100 ppm, the compound acts as a compatibilizer for the hard domains and soft domains of the thermoplastic polyurethane, the hard domains being finely microdispersed in the fiber so that high recoverability is exhibited. The reason why the unwinding property can be improved is also not completely understood, but the present inventors conjecture as follows. When the specific compound is present in the thermoplastic polyurethane elastic fibers at 0.05 ppm to 100 ppm, the compound acts as a compatibilizer for the hard domains and soft domains of the thermoplastic polyurethane, the soft domains being finely microdispersed in the fiber, reducing the area in which the soft domains contact each other within the fiber which is a cause of impaired unwinding property, and thus resulting in high unwinding property. The reason why the nozzle clogging can be inhibited is also not completely understood, but the present inventors conjecture as follows. When the specific compound is present in the thermoplastic polyurethane elastic fibers at 0.05 ppm to 100 ppm, the compound acts as a compatibilizer for the hard domains and soft domains of the thermoplastic polyurethane, the highly polar hard domains being finely microdispersed in the fiber so that charge accumulated in the thermoplastic polyurethane elastic fiber can be easily dissipated. Nozzle clogging by adhesion of fine powder generated from the nonwoven fabric or absorbent during production of diapers onto the thermoplastic polyurethane elastic fiber can therefore be reduced.

The content of the specific compound in the thermoplastic polyurethane elastic fiber of the embodiment is preferably 0.05 ppm to 10 ppm and more preferably 0.05 ppm to 5 ppm.

The specific compound in the thermoplastic polyurethane elastic fiber of the embodiment is preferably DMAc or DMF, and more preferably DMAc, from the viewpoint of increasing the effect of compatibilizing the hard domains and soft domains and improving unwinding property and recoverability for the thermoplastic polyurethane elastic fiber.

The thermoplastic polyurethane elastic fiber of the embodiment includes a thermoplastic polyurethane. The thermoplastic polyurethane may be any one with a thermoplastic property, with examples including but not being limited to compounds having structures polymerized from diisocyanates, polymer polyols, low-molecular-weight diols and low-molecular-weight diamines. The polymerization method is also not particularly restricted. Examples of thermoplastic polyurethanes include polyurethanes polymerized from a diisocyanate, a polymer polyol, and a low-molecular-weight diamine as a chain extender comprising an active hydrogen compound (also referred to as "polyurethane urea"), or polyurethanes polymerized from a diisocyanate, a polymer polyol, and a low-molecular-weight diol as the chain extender comprising an active hydrogen compound (also referred to as "polyurethane-urethane"). A trifunctional or greater glycol or isocyanate may also be used in a range that does not interfere with the effect of the invention. The term "thermoplastic" as used herein means that the compound has a reversible property whereby it can be melted by heating at below its decomposition temperature, exhibiting plastic flow while in the molten state, and then solidifying by cooling. A polyurethane resin generally begins to decompose at 230°C or higher.

Polymer polyols include, but are not limited to, polymer diols such as polyether-based diols, polyester-based diols and polycarbonate diols. From the viewpoint of hydrolysis resistance, the polymer polyol is preferably a polyether-based polyol and more preferably a polyether-based diol.

Examples of polyether-based polyols include polyethylene oxide, polyethylene glycol, polyethylene glycol derivatives, polypropylene glycol, polytetramethylene ether glycol, copolymer diols comprising tetrahydrofuran (THF) and neopentyl glycol, and copolymer diols comprising THF and 3-methyltetrahydrofuran. Any of these polyether-based polyols may be used alone, or two or more may be used in combination. The number-average molecular weight of the polymer diol is preferably 1000 to 8000. By using a polymer diol in this range it is possible to easily obtain an elastic fiber with excellent ductility, stretch recoverability and heat resistance. Preferred polyether-based polyols from the viewpoint of photoembrittlement are polytetramethylene ether glycol, copolymer diols comprising tetrahydrofuran (THF) and neopentyl glycol, and blends of these polyols.

Diisocyanates include aromatic diisocyanates, alicyclic diisocyanates and aliphatic diisocyanates. Examples of aromatic diisocyanates include, but are not limited to, diphenylmethane diisocyanate (MDI), tolylene diisocyanate, 1,4-diisocyanatobenzene, xylylene diisocyanate and 2,6-naphthalene diisocyanate. Examples of alicyclic diisocyanates and aliphatic diisocyanates include methylene bis(cyclohexylisocyanate) (H12 MDI), isophorone diisocyanate, methylcyclohexane 2,4-diisocyanate, methylcyclohexane 2,6-diisocyanate, cyclohexane 1,4-diisocyanate, hexahydroxylylene diisocyanate, hexahydrotolylene diisocyanate and octahydro-1,5-naphthalene diisocyanate. These diisocyanates can be used alone, or two or more may be used in combination. From the viewpoint of the stretch recoverability of elastic fiber, in particular, the diisocyanate is preferably an aromatic diisocyanate, and more preferably MDI.

The chain extender comprising an active hydrogen compound is preferably one or more selected from the group consisting of low-molecular-weight diamines and low-molecular-weight diols. A chain extender may also be one having both a hydroxyl group and an amino group in the molecule, such as ethanolamine. From the viewpoint of obtaining a thermoplastic polyurethane suitable for melt spinning, the active hydrogen compound is preferably a low-molecular-weight diol.

Examples of low-molecular-weight diamines as the chain extender comprising an active hydrogen compound include, but are not limited to, hydrazine, ethylenediamine, 1,2-propanediamine, 1,3-propanediamine, 2-methyl-1,5-pentanediamine, 1,2-diaminobutane, 1,3-diaminobutane, 1-amino-3,3,5-trimethyl-5-aminomethylcyclohexane, 2,2-dimethyl-1,3-diaminopropane, 1,3-diamino-2,2-dimethylbutane, 2,4-diamino-1-methylcyclohexane, 1,3-pentanediamine, 1,3-cyclohexanediamine, bis(4-aminophenyl)phosphine oxide, hexamethylenediamine, 1,3-cyclohexyldiamine, hexahydrometaphenylenediamine, 2-methylpentamethylenediamine and bis(4-aminophenyl)phosphine oxide.

Low-molecular-weight diol chain extenders comprising active hydrogen compounds include, but are not limited to, ethylene glycol, 1,3-propanediol, 1,4-butanediol, bishydroxyethoxybenzene, bishydroxyethylene terephthalate, 1-methyl-1,2-ethanediol and 1,6-hexanediol. These low-molecular-weight diols may be used alone, or two or more may be used in combination. From the viewpoint of improving unwinding property and recoverability of the elastic fiber and reducing nozzle clogging during production of diapers, the low-molecular-weight diol is preferably a diol with a molecular weight of 60 to 120, and more preferably 1,4-butanediol. If a diol with a molecular weight of 60 to 120 is used as a chain extender in the thermoplastic polyurethane elastic fiber of the embodiment, hydrogen bonding of the hard segments will be stronger and the unwinding property and recoverability will be improved.

The thermoplastic polyurethane may be produced by a process such as a one-shot process or prepolymer process using a publicly known technique for polyurethane reaction. For a prepolymer process, the polymer polyol and diisocyanate in a molar ratio of preferably 1.0:1.8 to 3.0 and more preferably 1.0:2.0 to 2.5 are added to a reaction tank equipped with a warm water jacket and stirrer under nitrogen purging, and the prepolymer reaction is carried out at preferably 40°C to 100°C and more preferably 50°C to 80°C, to obtain a prepolymer with isocyanate groups at both ends. An active hydrogen compound is then added to the prepolymer with isocyanate groups on both ends, in an amount approximately equivalent to the number of functional groups of the isocyanate end groups, for chain extension reaction. The equivalent ratio is preferably 0.95 to 1.1 and more preferably 0.99 to 1.05 with respect to the isocyanate end groups. Solid-phase polymerization may then be carried out to obtain a thermoplastic polyurethane with a predetermined molecular weight. As the method of chain extension reaction and solid-phase polymerization, the active hydrogen compound may be directly added to a batch reactor containing the prepolymer at preferably 40°C to 100°C, and then removed out and subjected to solid-phase polymerization at preferably 60°C to 200°C and more preferably 70°C to 150°C, and pelletized to obtain polymer chips. After uniformly mixing the prepolymer and active hydrogen compound, a cylindrical pipe or twin-screw extruder may be used, with the cylinder temperature in the polymerization zone set to preferably 160°C to 240°C, to obtain a polymer either continuously or semi-continuously, and then solid-phase polymerization may be carried out at preferably 60°C to 220°C and more preferably 70°C to 150°C.

The weight-average molecular weight (Mw) of the thermoplastic polyurethane elastic fiber of the embodiment is preferably 80,000 to 800,000, more preferably 80,000 to 500,000 and even more preferably 100,000 to 300,000, as measured by GPC with a polystyrene reference.

The number-average molecular weight (Mn) of the thermoplastic polyurethane elastic fiber of the embodiment is preferably 40,000 to 400,000, more preferably 40,000 to 250,000 and even more preferably 50,000 to 150,000, as measured by GPC with a polystyrene reference.

The polydispersity (Mw/Mn) of the thermoplastic polyurethane elastic fiber of the embodiment is preferably 1.8 to 3.5, more preferably 1.8 to 3 and even more preferably 1.8 to 2.5, as measured by GPC with a polystyrene reference.

The ratio of the maximum and minimum diameters of the multifilaments in the thermoplastic polyurethane elastic fiber of the embodiment is preferably 1.1 to 2.0 for an even higher effect of improving the recoverability and unwinding property. If the ratio of the maximum and minimum diameters of the monofilaments is 1.1 or greater the unwinding property will be improved, and more effectively so if the ratio of the maximum and minimum diameters of the monofilaments is 1.2 or greater. Presumably, a ratio of the monofilament diameters of 1.1 or greater reduces the contact area between filaments by suitably dispersing the monofilament diameters, thereby improving the unwinding property. If the ratio of the maximum and minimum diameters of the monofilaments is 2.0 or lower, the recoverability and unwinding property will be improved, and more effectively so if the ratio of the maximum and minimum diameters of the monofilaments is 1.8 or lower. By limiting the ratio of monofilament diameters to 2.0 or lower it is possible to improve the recoverability and unwinding property by reducing variation in the physical properties between monofilaments. The method for controlling the ratio of the maximum and minimum diameters of the monofilaments is not particularly restricted, but a suitable method is to align yarns discharged from two spinnerets with different numbers of holes to produce the thermoplastic polyurethane elastic fiber. Specifically, the thermoplastic polyurethane resin melted in an extruder is discharged to equal weights from two spinnerets with different numbers of holes, forming two yarns of the same size but with different numbers of filaments, which are then paralleled in a false twisting step to produce a single thermoplastic polyurethane elastic fiber. As a more specific example, the thermoplastic polyurethane resin may be discharged from spinnerets with 40 and 20 holes, respectively, each to a weight for 310 dtex yarn, to form two yarns which are then paralleled in a false twisting step, in which case the thermoplastic polyurethane elastic fiber will be 620 dtex with 60 filaments overall, but since the monofilaments from the spinneret with 20 holes have approximately 1.5 times the monofilament diameter as the monofilaments from the one with 40 holes, the ratio of the maximum and minimum diameters of the monofilaments can be considered to be about 1.5. Suitable alternative methods for controlling the ratio of the maximum and minimum diameters of the monofilaments are a method of adjusting the die temperature, and the cold air length, cold air speed, and cold air temperature in the cold air chamber, and moderately swaying the thread during spinning, a method of adjusting the location of convergence and the spinning speed to strictly control the temperature profile of the fiber during spinning, and a method of adjusting the speed of the godet roller during take-up to control the tension of the elastic fiber in the spinning cylinder.

The monofilament size is preferably 5 dtex to 40 dtex, more preferably 5 dtex to 20 dtex and even more preferably 8 dtex to 20 dtex, from the viewpoint of improving the recoverability and unwinding property for the thermoplastic polyurethane elastic fiber of the embodiment. If the monofilament size is 5 dtex to 40 dtex, the monofilament will have uniform tension during spinning, helping to reduce variation in the physical properties between monofilaments and allowing the recoverability and unwinding property to be improved. This effect is even more pronounced if the monofilament size is 8 dtex to 20 dtex.

The size and number of filaments of the thermoplastic polyurethane elastic fiber of the embodiment are not particularly restricted so long as a thermoplastic polyurethane elastic fiber with properties suited for a gather or hygiene article is obtained. The size is preferably 100 dtex to 2000 dtex and more preferably 300 dtex to 1500 dtex. The number of filaments is preferably 10 to 120.

For the embodiment, the outflow start temperature of the thermoplastic polyurethane elastic fiber using a flow tester is preferably 150°C or higher or 180°C or higher, and 220°C or lower, 200°C or lower or 180°C or lower. If the outflow start temperature is 150°C or higher, it will be possible to inhibit cohesion of the thermoplastic polyurethane elastic fiber and to obtain adequate unwinding property so that yarn breakage will not occur during processing. Limiting the outflow start temperature to 220°C or lower can improve the recoverability and unwinding property. The reason for this is not completely understood, but the present inventors conjecture as follows. If the outflow start temperature of the thermoplastic polyurethane elastic fiber is limited to 220°C or lower, mobility of the hard segments and soft segments will increase, helping to render the hard domains and soft domains more compatible so that the hard domains and soft domains become more finely microdispersed in the fiber and higher recoverability and unwinding property are exhibited. The method for producing a thermoplastic polyurethane elastic fiber with an outflow start temperature of 150°C to 220°C is not particularly restricted, and it may be a method of setting the weight-average molecular weight of the polyurethane polymer to a fixed range, or a method of adjusting the hard segment content in the polymer, for example. The method of setting the number-average molecular weight of the polyurethane polymer to a fixed range may be, for example, control by adjusting the equivalent ratio for addition of the active hydrogen compound with respect to the number of functional groups of the isocyanate end groups of the prepolymer with isocyanate groups at both ends, during the prepolymer process. The number-average molecular weight can generally be increased if the equivalent ratio is approximately 1 with respect to the isocyanate end groups.

In the thermoplastic polyurethane elastic fiber of the embodiment, the ratio of the 100% elongation stress at 20°C with respect to the 100% elongation stress at 80°C (hereunder also referred to as the "elongation stress ratio") is preferably 1.30 to 3.00, more preferably 1.30 to 2.70 and most preferably 1.50 to 2.50, from the viewpoint of improving the recoverability and unwinding property and reducing nozzle clogging. The reason why the recoverability and unwinding property are improved and nozzle clogging is reduced by limiting the elongation stress ratio to 1.30 to 3.00 is not completely understood, but the present inventors conjecture as follows. Since limiting the elongation stress ratio to 1.30 or greater helps prevent excessive reduction in the physical properties at room temperature when the filament is released, it allows the filament to be reeled with suitable tension and can thus improve the unwinding property. Limiting the elongation stress ratio to 1.30 or higher can also lower the physical properties at high temperature during which the hot-melt adhesive is coated, reduce friction resistance between the nozzle and filament and reducing electrification of the filament, thereby helping to prevent adhesion of paper dust to the filament, which is a cause of nozzle clogging. If the elongation stress ratio is limited to 3.00 or lower it will be possible to reduce chemical structural changes in the filament during the elongation process, and to improve the recoverability. Nozzle clogging is notably inhibited when the elongation stress ratio is 1.50 or higher and the specific compound content is 0.05 ppm to 5 ppm. The method for producing a thermoplastic polyurethane elastic fiber wherein the elongation stress ratio is 1.30 to 3.00 is not particularly restricted, and it may be a method in which the cooling and heating profile is controlled during the melt spinning step to control the crystalline structure of the hard domains in the thermoplastic polyurethane elastic fiber. For example, it may be a method in which cold air is applied by a cooling chamber set directly under the spinneret to cool the yarn discharged from the nozzle, and then a heating cylinder is used to reheat the yarn and take it up via a godet roll.

From the viewpoint of improving the unwinding property and recoverability, the thermoplastic polyurethane elastic fiber of the embodiment preferably has essentially no allophanate bonds formed by crosslinking urethane bonds by reaction with isocyanate groups. The phrase "has essentially no allophanate bonds" means that it has been judged to have "essentially no allophanate bond crosslinks", based on "evaluation of the presence or absence of allophanate bond crosslinks". By essentially lacking allophanate bond crosslinks, it is possible to prevent crosslinking of the urethane groups between monofilaments by isocyanate groups formed when the low-thermostable allophanate bonds decompose, which leads to impaired unwinding property. Having essentially no allophanate bond crosslinks can also prevent decomposition of low-thermostable allophanate bonds, for an effect of preventing impaired recoverability. Crosslinks formed by reaction with isocyanate groups also include biuret bonds formed by reaction of isocyanate groups with urea bonds in addition to allophanate bonds, but since the polyurethane elastic fiber of the embodiment has a low amount of urea bonds, the amount of biuret bonds that can form is also exceedingly low, and therefore the effect of biuret bond formation is negligible. The method for producing a thermoplastic polyurethane elastic fiber having essentially no allophanate bond crosslinks is not particularly restricted, and a suitable method is, for example, producing a thermoplastic polyurethane elastic fiber from a thermoplastic polyurethane polymerized while controlling the total number of moles of the polymer polyol and the chain extender comprising the active hydrogen compound to be at least the number of moles of isocyanate.

The thermoplastic polyurethane elastic fiber of the embodiment may also comprise a polymer other than a thermoplastic polyurethane, or an additive such as an antioxidant, light stabilizer (or light fastness agent), ultraviolet absorber, gas discoloration inhibitor, dye, activator, delustering agent or lubricant, so long as the desired effect of the invention is not lost.

From the viewpoint of unwinding property and processability for the embodiment, the thermoplastic polyurethane elastic fiber may be coated with a treatment agent such as an oil agent. Examples of treatment agents include, but are not limited to, silicone oils such as dimethylsilicone, mineral oils, and combinations of the same. The method of coating the treatment agent is not particularly restricted and may be a method of coating with an oiling roller, for example.

[Method for producing thermoplastic polyurethane elastic fiber]

The spinning method is preferably melt spinning, although this is not particularly restrictive so long as the desired physical properties are obtained. Examples of specific melt spinning methods include a method of loading thermoplastic polyurethane resin chips into an extruder, heating and melt spinning, as well as a method of melting thermoplastic polyurethane resin chips and then mixing them with a polyisocyanate compound and spinning, or a method of adding a reaction mixture of a prepolymer with isocyanate groups at both ends and an active hydrogen compound to a prepolymer with isocyanate groups at both ends, and continuously spinning without forming chips.

The thermoplastic polyurethane loaded into the extruder is metered with a metering pump and directed into the spinning head. If necessary, it may be filtered through a wire mesh or glass beads in a spinning head to remove contaminants, and then discharged from a nozzle and air-cooled with a cold air chamber, coated with a treatment agent, and wound up via a Godet roll.

In the spinning step, the die temperature, cold air speed, cold air temperature, heating cylinder temperature, location of convergence and spinning speed are adjusted, and the temperature profile and yarn tension of the filament are strictly controlled. The die temperature is preferably 180°C to 220°C and more preferably 200°C to 210°C. The cold air is provided by a common method of cooling for melt spinning, by contacting air perpendicular to the traveling direction of the yarn from directly below the spinneret, with a cold air speed of preferably 0.2 m/s to 2.0 m/s and more preferably 0.5 m/s to 1.2 m/s, and a cold air temperature of preferably 5°C to 20°C and more preferably 7°C to 15°C. The method of converging multifilaments may be setting a false twisting machine between godet rolls after the nozzle, and propagating twists from below by the strength of twisting, causing the filaments to converge together while controlling the heights of the convergence points. A common false twisting method may be selected, such as air false twisting with an air nozzle, or using a ring false twisting machine for contact with a rotating ring.

For production of the thermoplastic polyurethane elastic fiber of the embodiment, there are no particular restrictions on the method of adding the specific compound at 0.05 ppm to 100 ppm, and for example, it may be a method of melt spinning the thermoplastic polyurethane resin that contains the specific compound in a predetermined amount, a method of adding the specific compound in a predetermined amount into the extruder, or a method of applying a treatment agent that contains the specific compound onto the yarn while it is wound up. From the viewpoint of facilitating control of the specific compound content, it is preferred to use a method of melt spinning the thermoplastic polyurethane resin that contains the specific compound, in which case it is especially preferred to use a thermoplastic polyurethane elastic resin with the specific compound added at 0.05 ppm to 100 ppm.

[Gather and hygiene article]

A gather and hygiene article containing the thermoplastic polyurethane elastic fiber of the embodiment are also each one aspect of the invention. Specific examples of hygiene articles include absorbent articles such as disposable paper diapers and sanitary articles, as well as masks and bandages. Gathers with elastic fibers bonded to a nonwoven fabric via a hot-melt are used for the waist and leg parts of paper diapers, and the gather of the embodiment may also be suitably used for such parts. The thermoplastic polyurethane elastic fiber of the embodiment has satisfactory unwinding property and can therefore be used in processing steps for high-yield production of gathers and hygiene articles. Moreover, because the thermoplastic polyurethane elastic fiber of the embodiment has high recoverability it can be used to produce a gather and hygiene article which are easy to wear and remove, have satisfactory fittability and are unlikely to slip off.

EXAMPLES

The present invention will now be explained in more specific detail through the following Examples and Comparative Examples, with the understanding that the technical scope of the invention is in no way limited to the Examples. The evaluation methods used in the Examples and Comparative Examples are the following.

(1) GC measurement (measurement of specific compound content in filament)

After weighing out 0.2 g of the thermoplastic polyurethane elastic fiber and immersing it in 10 g of acetone, it was extracted for 5 hours and analyzed. The concentration of the specific compound was calculated as wt% by comparison with the area under a calibration curve for the specific compound, separately prepared using GC.

GC apparatus: Agilent Technologies 7890A
Inlet temperature: 320°C
Column: DB-1 MS (30 m $\times$ 0.25 mm$\varphi$), liquid phase thickness: 0.25 $\mu$m
Column temperature: 40°C (holding time: 5 minutes), temperature increase: 20°C/min, 320°C (holding for 11 minutes)
MS apparatus: Agilent Technologies 5975C MSD
Ion source temperature: 230°C
Ionization method: electron ionization

When the amount of obtainable thermoplastic polyurethane elastic fiber does not reach 0.2 g, the amount of acetone may be adjusted so that the concentration of the thermoplastic polyurethane elastic fiber is the same as for the test.

(2) NMR measurement (qualitative analysis of low-molecular-weight diol)

A predetermined amount of the thermoplastic polyurethane elastic fiber, dried for 5 hours at 80°C in a vacuum at -0.1 MPa, was measured out and analyzed by NMR for qualitative analysis of the low-molecular-weight diol (type and molecular weight), under the following conditions.

[NMR measurement conditions]

Apparatus: AVANCE NEO600 by Bruker Corp. Japan
Measurement nucleus: $^1$H
Resonance frequency: 600 MHz
Number of scans: 256
Measuring temperature: room temperature
Solvent: Deuterated dimethylformamide
Measuring concentration: 0.5 wt%
Chemical shift reference: dimethylformamide (8.0233 ppm)

(3) Measurement of ratio of maximum and minimum diameters of monofilaments

After sampling 1 m of the thermoplastic polyurethane elastic fiber, the diameters of all of the monofilaments were measured at five arbitrarily selected cross-sections, and the ratio of the maximum and minimum was recorded as the ratio of the maximum and minimum diameters of the monofilaments. The diameter of each monofilament was measured by observing a cross-section of the thermoplastic polyurethane elastic fiber using a JSM-6510 electron microscope by JEOL Corp. When the cross-sectional shape of the monofilament was a non-circular cross-section such as an elliptical or dumbbell shape, the circle of minimum diameter enclosing the entire cross-section (hereunder also referred to as "minimum-enclosing circle") was drawn, and the monofilament diameter was recorded as the diameter of the minimum-enclosing circle.

(4) Measurement of monofilament size

The monofilament size of the thermoplastic polyurethane elastic fiber was measured and calculated by the following procedure. A sample of the thermoplastic polyurethane elastic fiber was taken from the thermoplastic polyurethane elastic fiber wound body by reeling to a length in the relaxed state (also known as the "relaxed length") of 0.5 m, and the weight (g) of the sample was measured. The size of the thermoplastic polyurethane elastic fiber in its relaxed state (relaxed size A (dtex)) was calculated by the formula shown below. The measurement was conducted 4 times and the average value was calculated. The "relaxed state" is a state of standing for 2 hours or longer with no load after the yarn has been reeled out from the cheese.

$$\text{Relaxed size A (dtex)} = \text{Sample weight (g)} \times 10{,}000/\text{relaxed length (m)}$$

The number of monofilaments B was determined by observing a cross-section of the thermoplastic polyurethane elastic fiber using a JSM-6510 electron microscope by JEOL Corp.

· The monofilament size (dtex) of the thermoplastic polyurethane elastic fiber was calculated by the following formula:

$$\text{Monofilament size (dtex)} = A/B.$$

(5) Measurement of outflow start temperature of thermoplastic polyurethane elastic fiber

The outflow start temperature of the thermoplastic polyurethane elastic fiber is measured using a Model CFT-500D flow tester (product of Shimadzu Corp.). The outflow start temperature of the thermoplastic polyurethane elastic fiber is measured without prior treatment for removal of treatment agents such as oil agents, sampling 1.5 g for each measurement. The die (nozzle) used is one with a diameter of 0.5 mm and a thickness of 1.0 mm, and a 49 N extrusion load is applied with a preheating time of 240 seconds at an initial preset temperature of 120°C, after which the temperature is increased to 250°C at a constant rate of 3°C/min and the stroke length (mm) and temperature curve during that time are determined. As the temperature increases, the polymer in the toner is heated and the polymer begins to flow out from the die. The temperature at that time is recorded as the outflow start temperature.

(6) Measurement of recoverability of thermoplastic polyurethane elastic fiber

The thermoplastic polyurethane elastic fiber is set in a tensile tester (EZ-SX AUTOGRAPH by Shimadzu Corp.) in a 20°C, 65% RH atmosphere with an initial length of 5 cm, and after repeating elongation/recovery to 200% elongation 3 times at a rate of 1000%/min, the stress at 90% elongation at the third elongation R (cN) and the stress at 90% elongation at the third recovery R' (cN) are measured.

· The recoverability (%) of the thermoplastic polyurethane elastic fiber was calculated by the following formula:

$$\text{Recoverability (\%)} = (R'/R) \times 100.$$

(7) Method of evaluating presence or absence of allophanate bond crosslinks

Polyurethane elastic fiber that dissolved in the DMAc dissolution test described below but was not confirmed to have allophanate bonds in the NMR measurement described below, was judged to "have essentially no allophanate bond crosslinks". Polyurethane elastic fiber that did not dissolve in the DMAc dissolution test or dissolved in the DMAc dissolution test but was confirmed to have allophanate bonds in the NMR measurement, was judged to "have allophanate bond crosslinks".

<DMAc dissolution test>

The polyurethane elastic fiber is weighed out to 0.2 g and immersed in 10 g of DMAc, and the mixture is stirred at 20°C for 48 hours. When polymer masses with diameters of 1 mm or greater could not be visually confirmed after stirring, the fiber was judged to have dissolved in the DMAc.

<NMR measurement (qualitative analysis of allophanate bonds)>

Predetermined amounts of polyurethane elastic fiber and dimethyl sulfoxide as the internal standard, dried for 5 hours at 80°C in a vacuum of -0.1 MPa, were taken for NMR measurement. The measurement confirmed the proportion of allophanate bonds with respect to urethane bonds. The proportion of allophanate bonds to urethane bonds can be calculated by comparison of their respective hydrogen integral values, with absence of allophanate groups being defined as a proportion of less than 0.05%. The hydrogen signal for allophanate bonds is generally observed at 10.5 to 11.0 ppm, but this is not limitative.

[NMR measurement conditions]

Measuring apparatus: ECS400 by JEOL Corp.
Measurement nucleus: $^1$H
Resonance frequency: 400 MHz
Number of scans: 256
Measuring temperature: room temperature
Solvent: Deuterated dimethylformamide
Measuring concentration: 1.5 wt%
Chemical shift reference: dimethylformamide (8.0233 ppm)

(8) Method of measuring elongation stress ratio

Using a constant temperature and humidity tester in a tensile tester (RTG-1210 TENSILON by Orientech Co., Ltd.), an elastic fiber was set in the tensile tester in a 20°C, 65% RH atmosphere and a 80°C atmosphere, with an initial length of 5 cm and an initial load of 0 cN, without bending, and elongated to 200% elongation at an elongation speed of 500%/min, measuring the stress (cN) at 100% elongation. The elongation stress ratio of the elastic fiber was calculated using the following formula:

$$\text{Elongation stress ratio} = R'/R,$$

with the stress at 100% elongation in the 20°C atmosphere as R and the stress at 100% elongation in the 80°C atmosphere as R'. The tensile test at 20°C and 80°C were carried out using different samples.

(9) Production example for gather

A hot-melt adhesive (765E by Henkel Japan, Ltd.) which had been melted at 150°C was continuously coated using a V-slit onto four thermoplastic polyurethane elastic fibers that had been aligned parallel at 7 mm spacings and elongated to 2.5 times the original length, to a coating coverage of 0.04 g/m per elongated thermoplastic polyurethane elastic fiber, while continuously sandwiching the hot-melt adhesive-coated thermoplastic polyurethane elastic fiber between two nonwoven fabrics (ELTAS GUARD by Asahi Kasei Corp.), each having a width of 30 cm and a basis weight of 17 g/m$^2$, and continuously contact bonded between a pair of rollers having outer diameters of 16 cm and widths of 40 cm, pressing one of the rollers from above with an air cylinder (CQ2WB100-50DZ by SMC Co.) that was supplied with an air pressure of 0.5 MPa, to fabricate a gather.

(10) Wearable feel of gather

The gather fabricated in (9) was allowed to stand for 1 day in a non-elongated state to fully relax the stress of the elastic fibers. A ring with a length of 42 cm was then created from the relaxed gather. The ring was worn at the waist by 10 participants with waist lengths of 75 cm to 80 cm, and the number of persons judging the ring to be tight was counted.

(11) Method of evaluating unwinding property of thermoplastic polyurethane elastic fiber

After stripping to a winding thickness of 1 cm from the paper pirn, the elastic fiber wound body was supplied to an apparatus as shown in Fig. 1, and run through under conditions with the elastic fiber delivery roll 2 at a speed of 50 m/min, the pre-draft roll 3 (winding the elastic fiber 3 times) at a speed of 80 m/min and the take-up roll 4 at a speed of 85 m/min. The behavior of the elastic fiber in the observation zone 5 was visually observed for 3 minutes, and swaying of the thread was evaluated on the following scale. For evaluation, a smaller yarn swaying width corresponds to lower friction resistance during use of the yarn, and lower tendency for yarn breakage.

(Evaluation scale)

10: Yarn swaying width of ≥0 mm and <1 mm.
9: Yarn swaying width of ≥1 mm and <2 mm.
8: Yarn swaying width of ≥2 mm and <3 mm.
7: Yarn swaying width of ≥3 mm and <4 mm.
6: Yarn swaying width of ≥4 mm and <5 mm.
5: Yarn swaying width of ≥5 mm and <6 mm.
4: Yarn swaying width of ≥6 mm and <7 mm.
3: Yarn swaying width of ≥7 mm and <8 mm.
2: Yarn swaying width of ≥8 mm and <9 mm.
1: Yarn breakage width of ≥9 mm or no yarn breakage.

When the yarn swaying width was between two levels on the evaluation scale during the 3 minutes of visual observation, the evaluation results were represented as a width of, for example, "3 to 4".

(12) Method of evaluating resistance to nozzle clogging

A gather was produced for 10 hours by the same method as (9), except that ten polyurethane elastic fibers were aligned parallel at 7 mm spacings and elongated to 3 times the original length, and the number of nozzles that were free of surface contamination adhesion was recorded as the score.

[Example 1]

A 2400 g portion of polytetramethylene ether diol with a number-average molecular weight of 1800, and 750.75 g of 4,4'-diphenylmethane diisocyanate, were reacted for 3 hours at 60°C while stirring under a dry nitrogen atmosphere, to obtain a polyurethane prepolymer capped at both ends with isocyanate groups. After adding 150.95 g of 1,4-butanediol to the polyurethane prepolymer, the mixture was stirred for 15 minutes to obtain a polyurethane with a viscosity of 2000 poise (30°C).

It was then poured out onto a TEFLON$^R$ tray and annealed for 19 hours in a hot air oven at 110°C with the polyurethane in the tray, to obtain a thermoplastic polyurethane resin.

The obtained thermoplastic polyurethane resin was crushed into powder with a size of about 3 mm using a Model UG-280 crusher by Horai Co. The crushed chips were dried in a dehumidifying dryer under temperature conditions of 110°C to a moisture content of 100 ppm, and then the thermoplastic polyurethane resin powder and DMAc were loaded into a hopper so that the DMAc content of the thermoplastic polyurethane elastic fiber was 1 ppm, and melted in an extruder. After metering and pressurizing with a gear pump installed at the head and filtering with a filter, the melt was discharged from a 60-hole nozzle with a 0.23 mm diameter at a die temperature of 210°C, with a throughput for 620 dtex. The ratio of the maximum and minimum diameters of the monofilaments was then adjusted by blowing cold air from a cold air chamber with controlled cold air length and cold air speed, in a direction perpendicular to the fiber, carrying out melt spinning with appropriate swaying of the fiber. It was then passed through a concentric circle heating cylinder having a length of 50 cm and a center temperature of 130°C for the concentric circles, which was set directly under a cooling chamber, and a ring-shaped false twisting machine was used for propagation of twisting in the multifilament, which was subsequently wound up on a paper pirn while applying a treatment agent composed mainly of polydimethylsiloxane and a mineral oil, to obtain a wound body of a 620 dtex/60 filament thermoplastic polyurethane elastic fiber. The DMAc content of the thermoplastic polyurethane elastic fiber was 1 ppm, the ratio of the maximum and minimum diameters of the monofilaments was 1.5, and the outflow start temperature was 160°C.

[Examples 2 to 6]

Thermoplastic polyurethane elastic fibers (620 dtex/60 filament) were obtained by the same method as Example 1, except that the amount of DMAc loaded into the hopper was increased. The DMAc contents of the thermoplastic polyurethane elastic fibers were 0.05 ppm to 100 ppm, the ratios of the maximum and minimum diameters of the monofilaments were 1.5, and the outflow start temperatures were 159 to 161°C.

[Examples 7 to 11]

Thermoplastic polyurethane elastic fibers (620 dtex/60 filament) were obtained by the same method as Example 1, except that for each polymerized thermoplastic polyurethane resin used, the low-molecular-weight diol used for polymerization of the thermoplastic polyurethane resin was changed from 1,4-butanediol to an equimolar amount of ethylene glycol (Example 7), 1,3-propanediol (Example 8), 1,3-butanediol (Example 9), 1,6-hexanediol (Example 10) or 1,8-octanediol (Example 11).

[Examples 12 to 16]

Thermoplastic polyurethane elastic fibers (620 dtex/60 filament) were obtained by the same method as Example 1, except that cold air was blown in from the cold air chamber with increased cold air length and cold air speed.

[Examples 17 to 24]

Thermoplastic polyurethane elastic fibers (310 to 930 dtex, 14 to 120 filament) were obtained by the same method as Example 1, except that the number of holes and throughput of the nozzle were increased for melt spinning.

[Examples 25 to 29]

Thermoplastic polyurethane elastic fibers (620 dtex/60 filament) were obtained by the same method as Example 1, except that for each polymerized thermoplastic polyurethane resin used, the amount of 1,4-butanediol used for polymerization of the thermoplastic polyurethane resin was increased.

[Examples 30 to 32]

Thermoplastic polyurethane elastic fibers (620 dtex/60 filament) were obtained by the same method as Example 1, except that the compound loaded into the hopper was changed from DMAc to DMF (Example 30), DMSO (Example 31) or NMP (Example 32).

[Examples 33 to 38]

Thermoplastic polyurethane elastic fibers (620 dtex/60 filament) were obtained by the same method as Example 1, except that the center temperature of the concentric circles of the heating cylinder was changed.

[Example 39]

A thermoplastic polyurethane elastic fiber (620 dtex/60 filament) was obtained by the same method as Example 1, except that for the polymerized thermoplastic polyurethane resin used, the amount of 4,4'-diphenylmethane diisocyanate used for polymerization of the thermoplastic polyurethane resin was increased. The thermoplastic polyurethane elastic fiber was confirmed to have allophanate bonds in NMR measurement.

[Comparative Example 1]

A thermoplastic polyurethane elastic fiber (620 dtex/60 filament) was obtained by the same method as Example 1, except that DMAc was not loaded into the hopper.

[Comparative Example 2]

A thermoplastic polyurethane elastic fiber (620 dtex/60 filament) was obtained by the same method as Example 1, except that the amount of DMAc loaded into the hopper was adjusted so that the DMAc content of the thermoplastic polyurethane elastic fiber was 200 ppm.

The production conditions in each of the Examples and Comparative Examples and the measurement results for the properties of the obtained thermoplastic polyurethane elastic fibers and gathers are shown in Tables 1 to 3 below.

[Table 1]

Table 1

| | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|
| Specific compound type | DMAc | DMAc | DMAc | DMAc | DMAc | DMAc | DMAc | DMAc | DMAc | DMAc | DMAc | DMAc | DMAc | DMAc |
| Specific compound content in yarn (ppm) | 1 | 0.05 | 5 | 10 | 50 | 100 | 1 | 1 | 1 | 1 | 1 | 1 | 1 | 1 |
| Chain extender type | 1,4-butanediol | 1,4-butanediol | 1,4-butanediol | 1,4-butanediol | 1,4-butanediol | 1,4-butanediol | Ethylene glycol | 1,3-propanediol | 1,3-butanediol | 1,6-hexanediol | 1,8-octanediol | 1,4-butanediol | 1,4-butanediol | 1,4-butanediol |
| Chain extender molecular weight | 90.12 | 90.12 | 90.12 | 90.12 | 90.12 | 90.12 | 62.07 | 76.09 | 90.12 | 118.17 | 146.23 | 90.12 | 90.12 | 90.12 |
| Size (dtex) | 620 | 620 | 620 | 620 | 620 | 620 | 620 | 620 | 620 | 620 | 620 | 620 | 620 | 620 |
| Monofilament diameter maximum/ minimum | 1.5 | 1.5 | 1.5 | 1.5 | 1.5 | 1.5 | 1.5 | 1.5 | 1.5 | 1.5 | 1.5 | 1.1 | 1.2 | 1.8 |
| Number of filaments | 60 | 60 | 60 | 60 | 60 | 60 | 60 | 60 | 60 | 60 | 60 | 60 | 60 | 60 |
| Monofilament size (dtex) | 10.3 | 10.3 | 10.3 | 10.3 | 10.3 | 10.3 | 10.3 | 10.3 | 10.3 | 10.3 | 10.3 | 10.3 | 10.3 | 10.3 |
| Outflow start temperature (°C) | 160 | 159 | 161 | 159 | 161 | 160 | 158 | 157 | 158 | 154 | 154 | 160 | 159 | 161 |

| | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|
| Elongation stress ratio for 80°C and 20°C | 1.5 | 1.5 | 1.5 | 1.5 | 1.5 | 1.5 | 1.5 | 1.5 | 1.5 | 1.5 | 1.5 | 1.5 | 1.5 | 1.5 |
| Allophanate bond crosslinks present | No | No | No | No | No | No | No | No | No | No | No | No | No | No |
| Unwinding property | 10 | 10 | 10 | 9 | 7 | 6 | 10 | 10 | 10 | 10 | 2 | 8 | 10 | 10 |
| Resistance to nozzle clogging | 10 | 10 | 10 | 5 | 3 | 2 | 10 | 10 | 10 | 10 | 10 | 10 | 10 | 10 |
| Polyurethane elastic fiber recoverability (%) | 72 | 70 | 71 | 69 | 65 | 64 | 71 | 72 | 71 | 65 | 60 | 71 | 72 | 71 |
| Gather member feel during wear | 10 | 10 | 10 | 9 | 7 | 6 | 10 | 10 | 10 | 7 | 2 | 10 | 10 | 10 |

[Table 2]

Table 2

| | Example 15 | Example 16 | Example 17 | Example 18 | Example 19 | Example 20 | Example 21 | Example 22 | Example 23 | Example 24 | Example 25 | Example 26 | Example 27 | Example 28 |
|---|---|---|---|---|---|---|---|---|---|---|---|---|---|---|
| Specific compound type | DMAc | DMAc | DMAc | DMAc | DMAc | DMAc | DMAc | DMAc | DMAc | DMAc | DMAc | DMAc | DMAc | DMAc |
| Specific compound content in yarn (ppm) | 1 | 1 | 1 | 1 | 1 | 1 | 1 | 1 | 1 | 1 | 0.05 | 0.05 | 0.05 | 0.05 |
| Chain extender type | 1,4-butanediol | 1,4-butanediol | 1,4-butanediol | 1,4-butanediol | 1,4-butanediol | 1,4-butanediol | 1,4-butanediol | 1,4-butanediol | 1,4-butanediol | 1,4-butanediol | 1,4-butanediol | 1,4-butanediol | 1,4-butanediol | 1,4-butanediol |
| Chain extender molecular weight | 90.12 | 90.12 | 90.12 | 90.12 | 90.12 | 90.12 | 90.12 | 90.12 | 90.12 | 90.12 | 90.12 | 90.12 | 90.12 | 90.12 |
| Size (dtex) | 620 | 620 | 620 | 620 | 620 | 620 | 620 | 620 | 310 | 930 | 620 | 620 | 620 | 620 |
| Monofilament diameter maximum/minimum | 2 | 2.5 | 1.5 | 1.5 | 1.5 | 1.5 | 1.5 | 1.5 | 1.5 | 1.5 | 1.5 | 1.5 | 1.5 | 1.5 |
| Number of filaments | 60 | 60 | 120 | 90 | 75 | 32 | 16 | 14 | 30 | 90 | 60 | 60 | 60 | 60 |
| Monofilament size (dtex) | 10.3 | 10.3 | 5.2 | 6.9 | 8.3 | 19.4 | 38.8 | 44.3 | 10.3 | 10.3 | 10.3 | 10.3 | 10.3 | 10.3 |
| Outflow start temperature (°C) | 161 | 159 | 160 | 159 | 161 | 160 | 160 | 161 | 160 | 161 | 140 | 150 | 180 | 220 |

(continued)

| | Example 15 | Example 16 | Example 17 | Example 18 | Example 19 | Example 20 | Example 21 | Example 22 | Example 23 | Example 24 | Example 25 | Example 26 | Example 27 | Example 28 |
|---|---|---|---|---|---|---|---|---|---|---|---|---|---|---|
| Elongation stress ratio for 80°C and 20°C | 1.5 | 1.5 | 1.5 | 1.5 | 1.5 | 1.5 | 1.5 | 1.5 | 1.5 | 1.5 | 1.5 | 1.5 | 1.5 | 1.5 |
| Allophanate bond crosslinks present | No | No | No | No | No | No | No | No | No | No | No | No | No | No |
| Unwinding property | 9 | 2 | 9 | 9 | 10 | 10 | 9 | 9 | 10 | 10 | 3 | 10 | 10 | 10 |
| Resistance to nozzle clogging | 10 | 10 | 10 | 10 | 10 | 10 | 10 | 10 | 10 | 10 | 10 | 10 | 10 | 10 |
| Polyurethane elastic fiber recoverability (%) | 66 | 60 | 69 | 68 | 72 | 72 | 69 | 61 | 71 | 72 | 71 | 72 | 72 | 68 |
| Gather member feel during wear | 8 | 2 | 9 | 9 | 10 | 10 | 9 | 3 | 10 | 10 | 10 | 10 | 10 | 9 |

EP 4 372 132 A1

17

[Table 3]

[Table 3]

Table 3

| | Example 29 | Example 30 | Example 31 | Example 32 | Example 33 | Example 34 | Example 35 | Example 36 | Example 37 | Example 38 | Example 39 | Comp. Example 1 | Comp. Example 2 |
|---|---|---|---|---|---|---|---|---|---|---|---|---|---|
| Specific compound type | DMAc | DMF | DMSO | NMP | DMAc | DMAc | DMAc | DMAc | DMAc | DMAc | DMAc | DMAc | DMAc |
| Specific compound content in yarn (ppm) | 0.05 | 1 | 1 | 1 | 1 | 1 | 1 | 1 | 1 | 1 | 1 | 0 | 200 |
| Chain extender type | 1,4-butanediol | 1,4-butanediol | 1,4-butanediol | 1,4-butanediol | 1,4-butanediol | 1,4-butanediol | 1,4-butanediol | 1,4-butanediol | 1,4-butanediol | 1,4-butanediol | 1,4-butanediol | 1,4-butanediol | 1,4-butanediol |
| Chain extender molecular weight | 90.12 | 90.12 | 90.12 | 90.12 | 90.12 | 90.12 | 90.12 | 90.12 | 90.12 | 90.12 | 90.12 | 90.12 | 90.12 |
| Size (dtex) | 620 | 620 | 620 | 620 | 620 | 620 | 620 | 620 | 620 | 620 | 620 | 620 | 620 |
| Monofilament diameter maximum/minimum | 1.5 | 1.5 | 1.5 | 1.5 | 1.5 | 1.5 | 1.5 | 1.5 | 1.5 | 1.5 | 1.5 | 1.5 | 1.5 |
| Number of filaments | 60 | 60 | 60 | 60 | 60 | 60 | 60 | 60 | 60 | 60 | 60 | 60 | 60 |
| Monofilament size (dtex) | 10.3 | 10.3 | 10.3 | 10.3 | 10.3 | 10.3 | 10.3 | 10.3 | 10.3 | 10.3 | 10.3 | 10.3 | 10.3 |
| Outflow start temperature (°C) | 225 | 160 | 160 | 160 | 160 | 160 | 160 | 160 | 160 | 160 | 160 | 160 | 160 |
| Elongation stress ratio for 80°C and 20°C | 1.5 | 1.5 | 1.5 | 1.5 | 1 | 1.3 | 2.5 | 2.7 | 3 | 3.2 | 1.5 | 1.5 | 1.5 |

EP 4 372 132 A1

19

(continued)

| | Example 29 | Example 30 | Example 31 | Example 32 | Example 33 | Example 34 | Example 35 | Example 36 | Example 37 | Example 38 | Example 39 | Comp. Example 1 | Comp. Example 2 |
|---|---|---|---|---|---|---|---|---|---|---|---|---|---|
| Allophanate bond crosslinks present | No | No | No | No | No | No | No | No | No | No | Yes | No | No |
| Unwinding property | 9 | 9 | 9 | 9 | 4 | 9 | 10 | 10 | 10 | 10 | 5 | 1 | 1 |
| Resistance to nozzle clogging | 10 | 10 | 10 | 10 | 5 | 6 | 10 | 10 | 10 | 10 | 10 | 1 | 1 |
| Polyurethane elastic fiber recoverability (%) | 61 | 71 | 68 | 69 | 72 | 71 | 72 | 69 | 65 | 52 | 63 | 59 | 58 |
| Gather member feel during wear | 3 | 10 | 9 | 9 | 10 | 10 | 10 | 9 | 7 | 4 | 5 | 1 | 1 |

INDUSTRIAL APPLICABILITY

The thermoplastic polyurethane elastic fiber of the invention can be suitably used for production of clothing such as inner wear, stockings, compression wear and diapers, and during production steps for gathers in particular, the unwinding property is satisfactory, yarn breakage is reduced, and a gather with high fittability can be produced.

REFERENCE SIGNS LIST

1 Elastic fiber wound body
2 Delivery roll
3 Pre-draft roll
4 Take-up roll
5 Observation zone
6 Ceramic hook guide
7 Bearing-free roller

**Claims**

1. A thermoplastic polyurethane elastic fiber which comprises at least one compound selected from among dimethylacetamide (DMAc), dimethylformamide (DMF), dimethyl sulfoxide (DMSO) and N-methylpyrrolidone (NMP), at 0.05 ppm to 100 ppm.

2. The thermoplastic polyurethane elastic fiber according to claim 1, which comprises at least one compound selected from among dimethylacetamide (DMAc), dimethylformamide (DMF), dimethyl sulfoxide (DMSO) and N-methylpyrrolidone (NMP), at 0.05 ppm to 10 ppm.

3. The thermoplastic polyurethane elastic fiber according to claim 2, which comprises at least one compound selected from among dimethylacetamide (DMAc), dimethylformamide (DMF), dimethyl sulfoxide (DMSO) and N-methylpyrrolidone (NMP), at 0.05 ppm to 5 ppm.

4. The thermoplastic polyurethane elastic fiber according to any one of claims 1 to 3, which includes a thermoplastic polyurethane comprising a polymer polyol, a diisocyanate and a low-molecular-weight diol.

5. The thermoplastic polyurethane elastic fiber according to claim 4, wherein the molecular weight of the low-molecular-weight diol is 60 to 120.

6. The thermoplastic polyurethane elastic fiber according to any one of claims 1 to 3, wherein the thermoplastic polyurethane elastic fiber is multifilament yarn, and the ratio of the maximum and minimum diameter of the constituent monofilaments is 1.1 to 2.0.

7. The thermoplastic polyurethane elastic fiber according to claim 6, wherein the monofilament size is 5 dtex to 40 dtex.

8. The thermoplastic polyurethane elastic fiber according to any one of claims 1 to 3, wherein the outflow start temperature of the thermoplastic polyurethane elastic fiber as determined with a flow tester is 150°C to 220°C.

9. The thermoplastic polyurethane elastic fiber according to any one of claims 1 to 3, wherein for the thermoplastic polyurethane elastic fiber, the ratio of the 100% elongation stress at 20°C with respect to the 100% elongation stress at 80°C is 1.30 to 3.00.

10. The thermoplastic polyurethane elastic fiber according to any one of claims 1 to 3, which has essentially no allophanate bond crosslinks.

11. The thermoplastic polyurethane elastic fiber according to any one of claims 1 to 3, which is for a hygiene article.

12. A wound body of a thermoplastic polyurethane elastic fiber according to any one of claims 1 to 3.

13. A gather containing a thermoplastic polyurethane elastic fiber according to any one of claims 1 to 3.

14. A hygiene article containing a thermoplastic polyurethane elastic fiber according to any one of claims 1 to 3.

15. A method for producing a thermoplastic polyurethane elastic fiber according to any one of claims 1 to 3, wherein the method includes a step of melt spinning a polyurethane resin.

16. The method for producing a thermoplastic polyurethane elastic fiber according to claim 15, wherein the polyurethane resin comprises at least one compound selected from among dimethylacetamide (DMAc), dimethylformamide (DMF), dimethyl sulfoxide (DMSO) and N-methylpyrrolidone (NMP).

17. The method for producing a thermoplastic polyurethane elastic fiber according to claim 16, wherein the polyurethane resin comprises at least one compound selected from among dimethylacetamide (DMAc), dimethylformamide (DMF), dimethyl sulfoxide (DMSO) and N-methylpyrrolidone (NMP) at 0.05 ppm to 100 ppm.

18. The method for producing a thermoplastic polyurethane elastic fiber according to claim 11, wherein the method includes a step of melt spinning a polyurethane resin comprising at least one compound selected from among dimethylacetamide (DMAc), dimethylformamide (DMF), dimethyl sulfoxide (DMSO) and N-methylpyrrolidone (NMP) at 0.05 ppm to 100 ppm.

FIG. 1

## INTERNATIONAL SEARCH REPORT

| International application No. |
| --- |
| **PCT/JP2022/026616** |

### A.   CLASSIFICATION OF SUBJECT MATTER

*D01F 6/70*(2006.01)i; *C08G 18/32*(2006.01)i; *C08G 18/48*(2006.01)i; *C08G 18/65*(2006.01)i; *D01F 6/94*(2006.01)i
FI:   D01F6/70 A; C08G18/32 003; C08G18/48; C08G18/65 011; D01F6/70 B; D01F6/94 A

According to International Patent Classification (IPC) or to both national classification and IPC

### B.   FIELDS SEARCHED

Minimum documentation searched (classification system followed by classification symbols)

D01F6/70; C08G18/32; C08G18/48; C08G18/65; D01F6/94

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.   DOCUMENTS CONSIDERED TO BE RELEVANT

| Category* | Citation of document, with indication, where appropriate, of the relevant passages | Relevant to claim No. |
| --- | --- | --- |
| A | WO 2006/043568 A1 (ASAHI GLASS CO., LTD.) 27 April 2006 (2006-04-27)<br>entire text | 1-18 |
| A | WO 2019/103013 A1 (ASAHI KASEI KK) 31 May 2019 (2019-05-31)<br>entire text | 1-18 |
| A | WO 2020/250994 A1 (ASAHI KASEI KK) 17 December 2020 (2020-12-17)<br>entire text | 1-18 |
| A | JP 2015-224399 A (ASAHI KASEI FIBERS CORP.) 14 December 2015 (2015-12-14)<br>entire text | 1-18 |
| P, A | WO 2022/034868 A1 (ASAHI KASEI KK) 17 February 2022 (2022-02-17)<br>entire text | 1-18 |
| P, A | WO 2022/054811 A1 (ASAHI KASEI KK) 17 March 2022 (2022-03-17)<br>entire text | 1-18 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 August 2022** | **30 August 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/026616**

| Patent document cited in search report | | | Publication date (day/month/year) | Patent family member(s) | | | Publication date (day/month/year) |
|---|---|---|---|---|---|---|---|
| WO | 2006/043568 | A1 | 27 April 2006 | US | 2006/0281891 | A1 | |
| | | | | entire text | | | |
| | | | | EP | 1803755 | A1 | |
| | | | | CN | 1972977 | A | |
| | | | | KR | 10-2007-0067006 | A | |
| | | | | TW | 200628506 | A | |
| WO | 2019/103013 | A1 | 31 May 2019 | DE | 112018005944 | T | |
| | | | | entire text | | | |
| | | | | CN | 111433396 | A | |
| | | | | SG | 11202004526U | A | |
| | | | | TW | 201925556 | A | |
| WO | 2020/250994 | A1 | 17 December 2020 | (Family: none) | | | |
| JP | 2015-224399 | A | 14 December 2015 | (Family: none) | | | |
| WO | 2022/034868 | A1 | 17 February 2022 | (Family: none) | | | |
| WO | 2022/054811 | A1 | 17 March 2022 | (Family: none) | | | |

Form PCT/ISA/210 (patent family annex) (January 2015)

**REFERENCES CITED IN THE DESCRIPTION**

**Patent documents cited in the description**

- JP 2017186704 A

- JP 2003049368 A